# EUROPEAN PATENT APPLICATION

(11) **EP 2 639 144 A1**
(43) Date of publication of application: **18.09.2013**
(21) Application number: 12425053.1
(22) Date of filing: 13.03.2012
(51) Int. Cl.: B62H 3/04, B60L 11/18, B60L 11/00, B60L 7/24, B60L 7/10

(54) **Parking and charging system for two-wheeled electric vehicles**

(71) Applicant: G.C.I. Group S.r.l., 20090 Trezzano sul Naviglio (MI) (IT)
(72) Inventor: Stefanizzi, Luigi, 20090 Trezzano s. Naviglio, MI (IT); Stefanizzi, Alessandro, 20090 Trezzano s. Naviglio, MI (IT); Stefanizzi, Ivan, 20090 Trezzano s. Naviglio, MI (IT); Rosa, Antonello, 20090 Trezzano s. Naviglio, MI (IT)
(74) Representative: Spina, Alessandro

(57) **Abstract**

The invention relates to a parking and charging system for two-wheeled electric vehicles. The system comprises a support (10) suitable to receive a two-wheeled electric vehicle (20) and a coupling device (40) associated with the axis of one of the wheels (21) of the electric vehicle (20). The support (10) comprises guides (50) configured to mate with the coupling device (40) associated with the axis of the wheel (21) of the electric vehicle (20) and a guide-rail (60) configured to receive the wheel (21). The guides (50) comprise at a stop end (52) thereof electrical terminals (31) of an electric power supply means (30). The coupling device (40) comprises a pair of pins (41) which are fixed to the ends of the axis of the wheel (21) and are provided with electrical contacts (45) connected to the poles of the battery of the electric vehicle (20). The guide-rail (60) of the support (10) protrudes beyond the guides (50) in an insertion direction (L1) of the electric vehicle (20) and both the guide-rail (60) that the guides (50) are provided with leading surfaces. Thanks to these features, a user is not obliged to make an accurate alignment phase of the electric vehicle (20) relative to the support (10), but simply has to follow the insertion path defined by the guide-rail (60), which determines the proper alignment of the pins (41) of the coupling device (40) of the electric vehicle (20) relative to the guides (50), which results in a considerably easy, rapid and intuitive insertion maneuver.

## Description

The present invention generally relates to the field of sustainable mobility and in particular to a system for parking and charging two-wheeled vehicles of the electric type, such as bicycles.

Known systems for the parking and charging of two-wheeled electric vehicles comprise supports configured to receive and support an electric vehicle and electric power supply means configured to be connected to its battery to allow charging thereof.

The supports are generally arranged in parking stations that comprise suitable control panels allowing to manage the access to the supports and the use of the electric power supply means for recharging.

An electric two-wheeled vehicle, for example a bicycle, can be restrained to the support at different points such as, for example, a wheel, a portion of the frame, the handlebar, the stand and the like and to this aim it comprises a suitable coupling device.

The electric power supply means may be arranged in suitable columns, as it is e.g. disclosed in patent GB 2438979, which include sockets of the traditional type configured to receive corresponding plugs associated to the batteries of the electric vehicles.

There are also known parking and charging systems wherein the electric power supply means are completely integrated in the supports, whereby, when an electric two-wheeled vehicle is mechanically restrained to the support, it is also electrically connected to the supply means.

In order to allow connection to the power supply means, the device that allows mechanical coupling of the electric vehicle to the support may include electrical contacts suitable for connection with corresponding electrical terminals of the power supply means integrated in the support. Therefore, in this case the coupling device performs both the functions of mechanically and electrically connecting.

An example of a parking and charging system in which the electric power supply means are integrated in the support is described in the German utility model DE 202007012506 U1. This document discloses a support for two-wheeled electric vehicles comprising a base to which a pair of vertical parallel walls suitable to receive a wheel of a vehicle are restrained. The support further includes an upright on which the terminals of electric power supply means are fixed. The vehicle is correspondingly provided with coupling means suitable to allow electrical connection to the supply means. The coupling means may be fixed on one or on both legs of the fork of any one of the vehicle wheels, for example the front wheel.

Another example of a parking and charging system wherein the electric power supply means are integrated in the support is described in the European patent application EP 2168848 A1, in which the coupling device of the electric vehicle comprises a pair of pins with a substantially cylindrical shape that are mounted on the axis of one of its wheels and connected to the battery through respective electrical wires. The support comprises a pair of uprights that extend vertically from a base thereof and a pair of substantially horizontal guides formed in the uprights and suitable to receive the pins fixed on the axis of the vehicle wheel. The guides include an entry open end and a stop closed end at which the electrical terminals of the power supply means integrated in the support are arranged. By lifting the wheel and inserting and sliding the pins along the respective guides, it is possible to lock the vehicle in the support at the stop position of the guides, thus also allowing electrical connection to the supply means for charging the battery.

The parking and charging systems for two-wheeled electric vehicles in which the supports completely integrate the electric power supply means for recharging the batteries are particularly suitable for the development of rental services known as "bike sharing", which are becoming more and more popular in urban areas. As explained above in fact, the electric vehicles that can be inserted into the supports are only those provided with coupling means suitable for connection to the electric power supply means integrated therein and thus are much more suitable than other electric vehicles to be standardized in terms of the shape, size and accessories.

Notwithstanding the numerous examples of parking and charging systems, the difficulty of connection of the vehicle to the support is a recurrent problem. In some cases, in fact it is necessary to lift the vehicle from the ground, which is not always easy due to the heavy weight of electric vehicles and may be particularly uncomfortable for elderly people.

It may also be difficult to properly align the coupling device of the electric vehicle to the support, and thus to obtain the correct parking position and electrical connection for charging the battery.

Another problem of parking and charging systems known in the art is that the supports have several protruding elements and sharp edges that can cause damage to persons and things, for example in case of fall of an electric vehicle during a parking maneuver.

There is therefore a need to improve parking and charging systems for two-wheeled electric vehicles, which is an object of the present invention.

It is also an object of the present invention to provide a parking and charging system for two-wheeled electric vehicles having a simple and economical structure, suitable for a bike sharing service.

An idea of solution underlying the present invention is to provide a parking and charging system comprising a support suitable to allow coupling and charging of a two-wheeled electric vehicle, wherein the support comprises guides configured to receive a coupling device associated with the axis of a wheel of the electric vehicle and a guide-rail configured to receive the wheel. The guides comprise electrical terminals of electric power supply means arranged at a stop end thereof. The coupling device comprises pins fixed to the ends of the axis of the wheel and provided with electrical contacts connected to the poles of the battery of the electric vehicle. The guide-rail of the support protrudes beyond the guides in the insertion direction of the electric vehicle and both the guide-rail and the guides are provided with leading surfaces.

Thanks to these features a user is not obliged to carry out an accurate alignment phase of the electric vehicle relative to the support, but simply has to follow the insertion path defined by the guide-rail that determines the correct alignment of the pins of the coupling device of the electric vehicle relative to the guides, which results in a considerably easy, rapid and intuitive insertion maneuver.

The guides of the support extend in the insertion direction of the electric vehicle and preferably comprise a first portion and a second portion inclined with respect to the base of the support. With reference to the insertion direction of the electric vehicle into the support, the first portion is inclined in an ascending direction from an entry open end to an intermediate portion of the guide, while the second portion is inclined in a descending direction from the intermediate portion towards a stop closed end of the guide.

The sequence of an ascending and a descending portion in the insertion direction of the electric vehicle into the support allows to make the pins of the coupling device fall towards the stop closed ends of the respective guides, and thus to the terminals of the power supply means, thus maintaining stable both the insertion position of the vehicle in the support and the connection to the electric power supply means.

Another advantage provided by the invention is that this particular configuration of the guides allows to give the user a precise and intuitive feedback once the parking and charging position has been reached. Once past the intermediate portion of the guide, in fact, the vehicle falls by gravity towards the stop end position until it stops.

Still another advantage provided by the invention is that the guides of the support and the pins of the coupling device mounted on the electric vehicle are configured so as to accomplish a constraint in a transverse direction of the support, allowing to stably maintain the vehicle in a vertical position.

According to an embodiment of the invention, the support is completely covered by a shell suitable to prevent users to contact the electric power supply means, as well as to hide the uprights and the guides. The shell has a dome shape totally devoid of sharp edges and projecting elements, thus minimizing the risk of damages to the users of the parking and charging system.

Further advantages and features of the parking and charging system according to the present invention will become clear to those skilled in the art from the following detailed and non-limiting description of embodiments thereof, with reference to the accompanying drawings in which:
- Figure 1 is a top view showing a two-wheeled electric vehicle and a parking and charging support according to the invention;
- Figure 1a shows a detail of Figure 1;
- Figure 2 shows a longitudinal section taken along line II-II of Figure 1;
- Figure 3 shows a longitudinal section similar to that of Figure 2, in which the two-wheeled vehicle is partially inserted in the support;
- Figure 4 is a cross-sectional view taken along line IV-IV of Figure 3;
- Figure 5 is a top view showing the two-wheeled vehicle completely inserted in the support;

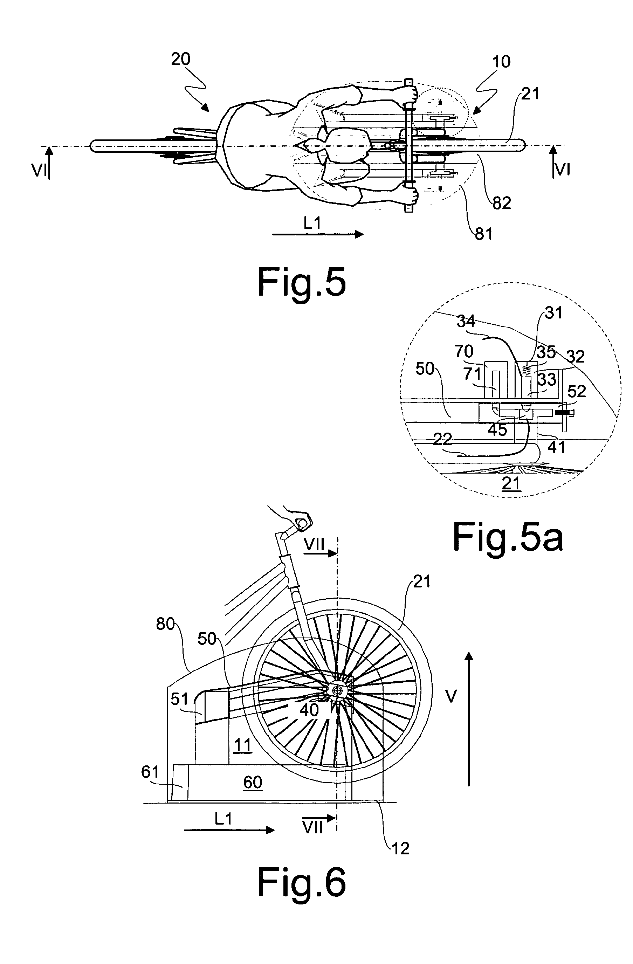

- Figure 5 a shows a detail of Figure 5;
- Figure 6 shows a longitudinal section taken along line VI-VI of Figure 5;

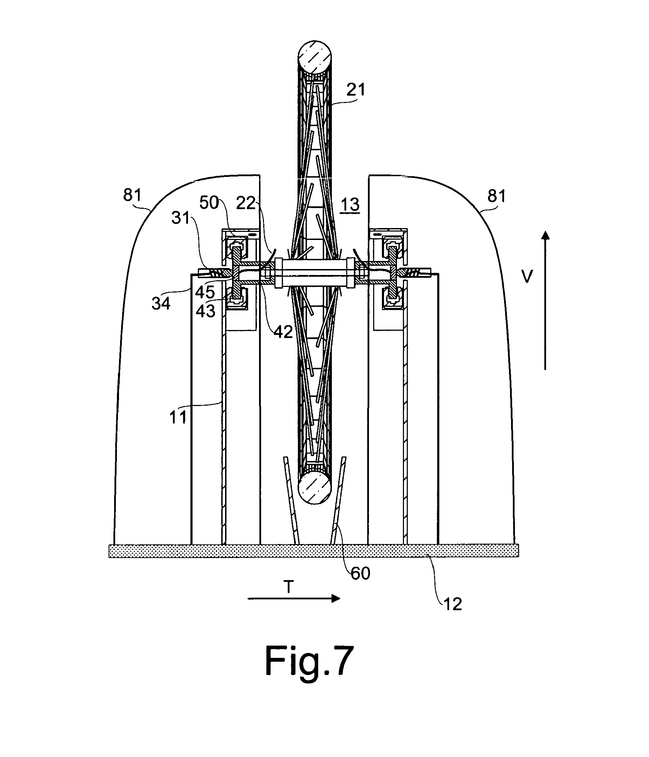

- Figure 7 shows a cross section taken along line VII-VII of Figure 6.

Referring to the figures, the parking and charging system for two-wheeled vehicles of the electric type according to the invention comprises a support 10 configured to receive and support a two-wheeled electric vehicle 20, such as a bicycle.

The support 10 comprises electric power supply means 30 suitable to allow charging of a battery (not shown) of the electric vehicle 20 when the latter is inserted therein. Correspondingly, the electric vehicle 20 comprises coupling means 40 suitable to allow mechanical and electrical connection with the support 10.

When the electric vehicle 20 is completely inserted into the support 10, it is arranged in a parking and charging position in which it is stably maintained in a substantially vertical position and is connected to the electric power supply means 30.

The charging cycle is managed by a control system (not shown) that may for example be integrated into a control panel of a parking station comprising a plurality of supports 10. The control system may also perform several other functions and e.g. managing identification data of the electric vehicle 20, calculating the toll associated with the duration of the parking, providing information about the availability of supports 10 in the parking station and the like.

The coupling means 40 associated with the electric vehicle 20 comprise in particular a pair of pins 41 restrained at the ends of the axis of one of its wheels, for example the front wheel 21.

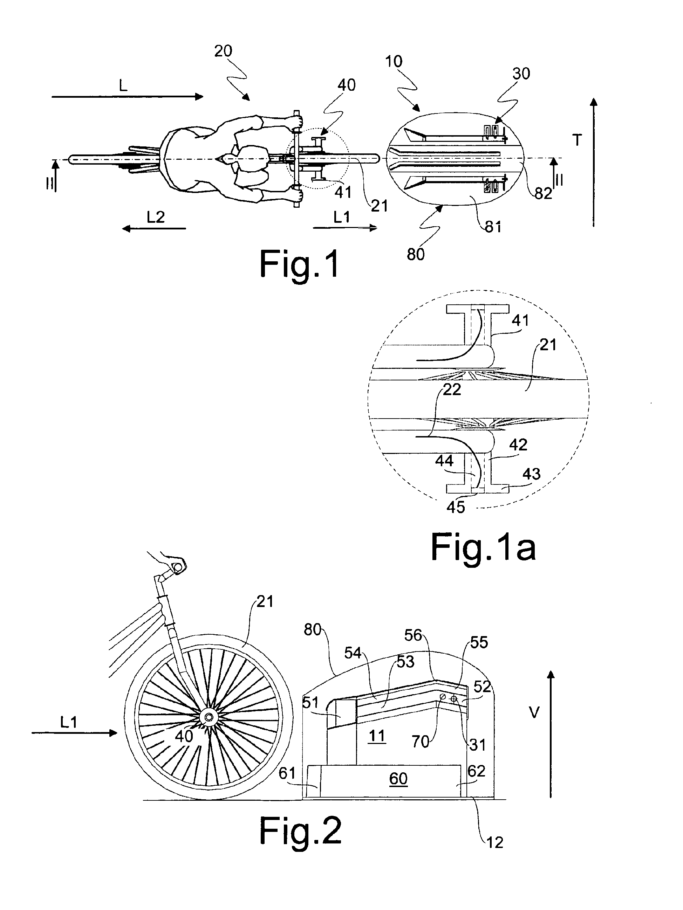

With particular reference to Figure 1a, each pin 41 comprises a hollow cylindrical body 42 intended to be restrained coaxially to the axis of the wheel 21 and a flanged element 43 having a larger diameter than the hollow cylindrical body 42 and arranged at the end thereof opposite to the end intended to be inserted coaxially to the axis of the wheel 21. In an assembled configuration, the pins 41 project laterally from the wheel 21 with the respective flanged elements 43 facing outwards.

A cavity 44 of the pin 41 is closed at the flanged element 43 by an electrical contact 45 that is connected to an electric wire 22, in turn connected to a pole of the battery of the electric vehicle 20.

The support 10 is correspondingly configured to receive and hold the electric vehicle 20 in correspondence with the axis of the wheel 21, on which the pins 41 of the coupling device 40 are mounted.

The support 10 comprises a pair of uprights 11 which extend in a vertical direction V from a base 12 thereof. A pair of guides 50 suitable to receive the pins 41 are respectively fixed to the uprights 11 and have a shape the cross section of which is complementary to the cross section of the pins 41.

In order to receive and accommodate the wheel 21 of the electric vehicle 20, the uprights 11 are suitably spaced from one another in a transverse direction T of the support 10, perpendicular to the vertical direction V.

The guides 50 extend in a longitudinal direction L of the support 10, perpendicular to the transverse direction T and to the vertical direction V, between an entry open end 51 and a stop closed end 52, in correspondence of which electrical terminals 31 of the power supply means 30 are arranged.

The longitudinal direction L of the support 10 is also the direction along which the electric vehicle 20 is inserted into it and withdrawn therefrom. The insertion direction is indicated in the figures with an arrow L1, while the withdrawal direction is indicated with an arrow L2.

The guides 50 have a box shape and include a longitudinal aperture 53 which extends longitudinally between the entry open end 51 and the stop closed end 52 and faces an inner space 13 of the support 10 suitable to receive the wheel 21 of the electric vehicle 20. The longitudinal aperture 53 has a height lower than that of the guide 50 and substantially corresponding to the diameter of the cylindrical body 42 of the pin 41.

During the insertion of the electric vehicle 20 into the support 10, the flanged element 43 of each pin 41 slides inside the respective guide 50, while the cylindrical body 42 slides along the longitudinal aperture 53. Since the longitudinal aperture 53 has a height lower than that of the guide 50, the pin 41 is transversely locked relative thereto, thereby making it possible to keep the electric vehicle 20 stably in a vertical position.

In other words, the guides 50 of the support 10 and the pins 41 of the coupling device 40 mounted on the electric vehicle 20 have complementary shapes in cross section and are configured so as to accomplish a constraint in the transverse direction T of the support 10, which prevents the electric vehicle 20 from falling.

According to the present invention, the support 10 further includes a guide-rail 60 arranged in the inner space 13 and fixed at its base 12. Similarly to the guides 50, also the guide-rail 60 extends in the longitudinal direction L of the support 10 between an entry end 61 and a stop end 62, and is configured so as to receive a tire of the wheel 21 of the electric vehicle 20. In order to allow to accommodate tires of a different size, the guide-rail 60 preferably has a V-shaped cross-section.

The guide-rail 60 cooperates with the guides 50 in order to keep the electric vehicle 20 in a vertical position and is spaced therefrom in the transverse direction T in such a way that, when the wheel 21 is inserted therein, the flanged ends 43 of the pins 41 are inserted into the guides 50 with a small play. The position of the guide-rail 60 is symmetrical with respect to the guides 50 in the transverse direction T.

The entry end 61 of the guide-rail 60 precedes the entry ends 51 of the guides 50 in the insertion direction L1 of the electric vehicle 20 into the support 10. Therefore, during insertion into the support 10, the wheel 21 of the electric vehicle 20 first meets the guide-rail 60 and then the guides 50.

The technical effect of this configuration is to obtain a correct alignment of the electric vehicle 20, and in particular of its wheel 21, with respect to guides 50 before the pins 41 fixed on its axis are inserted in them. Consequently, a user is not obliged to make a precise alignment between the pins 41 and the guides 50, but simply has to follow the insertion path defined by the guide-rail 60, which determines the correct alignment between the pins 41 and guides 50, thus making the insertion maneuver considerably easy, rapid and intuitive.

In order to further facilitate the insertion of the electric vehicle 20 into the support 10, the entry end 51 of the guides 50 and the entry end 61 of the guide-rail 60 progressively widens in the longitudinal direction L towards the outside of the support 10, thus defining leading surfaces for both the tire of the wheel 21 and the pins 41.

With particular reference to figures 5 to 7, when the electric vehicle 20 is completely inserted into the support 10, the electrical contacts 45 fixed to the pins 41 are aligned to and in contact with the electrical terminals 31 of the power supply means 30.

In the illustrated embodiment, the electrical terminals 31 of the supply means respectively comprise a cylindrical housing 32 made of an insulating material within which a rod 33 of conductive material is slidably fitted, which rod 33 is connected to an electric cable 34 in turn connected to an electric power supply. The rod 33 is urged outwardly relative to the cylindrical body 32 e.g. by way of a spring 35, and protrudes inside the guide 50, so that when the pin 41 reaches the stop closed end 52 the rod 33 presses against the contact 45, thus closing the electric circuit and allowing to supply the battery.

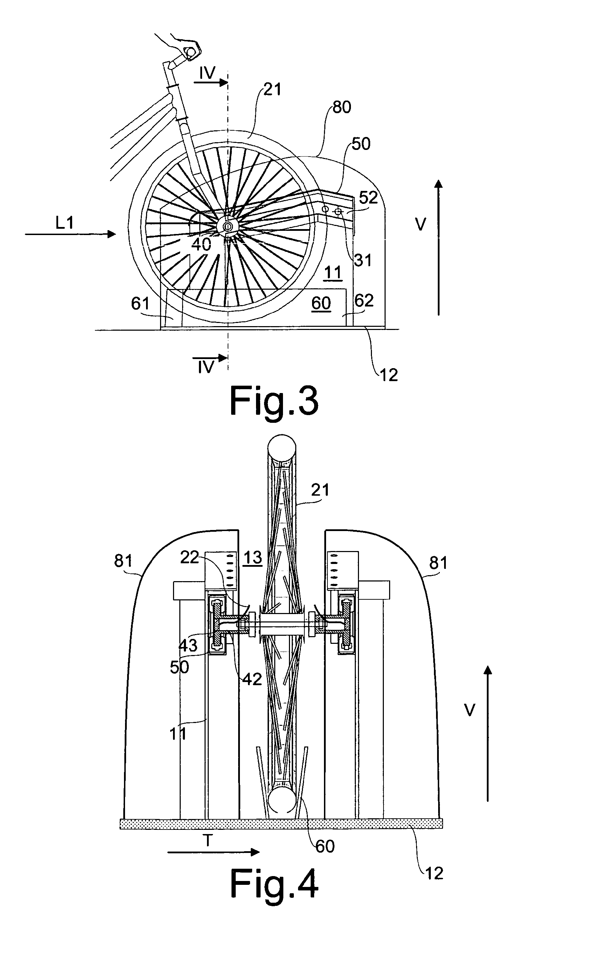

With reference to Figures 2, 3 and 6, each guide 50 preferably comprises a first portion 54 and a second portion 55 inclined with respect to the base 12 of the support 10.

The first portion 54 is inclined in an ascending direction relative to the insertion direction of the electric vehicle 20 into the support 10, from the entry open end 51 towards an intermediate portion 56 of the guide 50, while the second portion 55 is inclined in a descending direction from the portion intermediate 56 towards the stop closed end 52 of the guide 50.

The sequence of an ascending and a descending portion in the insertion direction of the electric vehicle 20 into the support 10 allows to make the pins 41 fall towards the stop closed ends 52 of the respective guides 50, and thus to the terminals 31 of the power supply means 30, thus stably maintaining both the insertion position of the electric vehicle 20 in the support 10 and the connection to the electric power supply means 30.

This particular configuration of the guides 50 also allows to give the user a precise and highly intuitive feedback once the parking and charging position of the electric vehicle has been reached. Once past the intermediate portion 56, in fact, the electric vehicle 20 falls by gravity towards the stop ends of the guides 50 until it stops.

The slope of the inclined portions 54, 55 relative to the base 12 is preferably comprised between 10° and 15° in order not to require excessive efforts to the user. In addition, the first portion 54 is longer than the second portion 55, which allows to keep the wheel 21 slightly raised from the base 12 of the support 10 in the parking and charging position, thus ensuring the correct alignment between the parts in contact, namely the electrical contacts 45 and the terminals 31.

The guides 50 may advantageously be provided with locking means configured to lock the pins 41 at the stop closed ends 52, thus preventing withdrawal of the vehicle e.g. when charging the battery and, more generally, when the vehicle is parked in the parking station.

In the illustrated embodiment, the locking means comprise a linear actuator 70 associated with each guide 50 and arranged parallel to the terminal 31 of the power supply means 30. The actuator 70, for example of the solenoid type, comprises an element 71 movable between a first locking position and a second unlocking position.

When the pins 41 are located at the stop closed end 52, the movable elements 71 of the actuators 70 associated with the guides 50 are brought in the first locking position, in which they protrude into the respective guides 50 thus preventing movement of the pins 41 in the withdrawal direction L2 of the electric vehicle 20 from the support 10.

The actuators 70 are unlocked upon request of the user through the control system that manages the operation of the power supply means 30 associated with the support 10, by bringing the movable elements 71 in the second unlocked position and allowing withdrawal of the electric vehicle 20.

According to a further aspect of the invention, the support 10 comprises an outer shell 80 suitable to completely cover the uprights 11, the guides 50 and the guide-rail 60, thus preventing access by unauthorized personnel.

In order to allow insertion of the wheel 21 of the electric vehicle 20, the shell 80 comprises two symmetrical half-shells 81 which define in the longitudinal direction L a slot 82 having a size substantially corresponding to the lateral size of the frame of the electric vehicle 20.

The shell 80 preferably has a dome shape totally devoid of sharp edges and projecting elements, which, in addition to protecting the internal components of the system, minimizes the risk of damages to persons and things in case of collision, and is an aesthetically pleasing element suitable to be integrated in an urban public space.

In order to minimize fouling problems of the guides 50 and the guide-rail 60, and to prevent the ingress of dirt, dust and water into the support 10, the shell 80 may advantageously be provided with comb-like elements (not shown) arranged along the edges of the slot 82 and suitable to close it completely.

In the illustrated embodiment the support 10 comprises a pair of uprights 11 and a pair of respective guides 50. Consequently, the electric vehicle 20 is provided with a pair of pins 41 each one of which is electrically connected to a battery pole and intended to be inserted in the guides 50 to be electrically connected to the terminals 31 arranged therein.

However, it will be understood that the support 10 could also include a single upright 11 and a single guide 50 allowing to obtain the same effects of mechanical and electrical connection with the pin 41 restrained to the wheel axis 21 of the electric vehicle 20. In this case the single pin 41 should include the electrical contacts of both poles of the battery of the electric vehicle 20 and the single terminal 31 of the power supply means 30 should correspondingly comprise a pair of electrical contacts.

The support 10 may also advantageously comprise a towing device (not shown) suitable to engage at least one of the pins 41 associated to the wheel axis 21 of the electric vehicle 20 and to move it along the guide 50 between the entry open end 51 and the stop closed end 52.

The provision of a towing device is extremely advantageous because it allows to completely entrust the support 10 with the task of bringing the electric vehicle 20 in the parking and charging position once the pin or pins 41 are inserted in the respective guides 50. Consequently, the parking maneuver is even more facilitated and substantially independent of the strength of the user.

It will be understood that the towing device may also be used in the opposite direction, i.e. in order to bring the electric vehicle 20 from the parking and charging position to the position wherein the users may withdraw it from the support 10.

According to an embodiment of the invention the towing device comprises a slide slidably restrained to one of the uprights 11 of the support 10 and arranged parallel to the guide 50 fixed thereon. The slide is movable between two stop positions respectively corresponding to the ends of the guide 50 and may be actuated mechanically, e.g. by way of springs, weights, counterweights and the like, electrically, e.g. by way of linear actuators, or by means of pneumatic or hydraulic actuators.

The embodiments of the invention herein described and illustrated are only examples susceptible to numerous variants. For example, the stop end position of the pins 41 in the respective guides 50 may be finely adjusted by means of screw registers arranged at their stop closed ends 52. Moreover, in order to avoid that the electrical connection between the pins 41 and terminals 31 causes battery discharge it is possible to associate diodes to the electric supply circuit of the battery.

## Claims

1. A support (10) for the parking and charging of two-wheeled electric vehicles, said support (10) being configured to engage a coupling device (40) of an electric vehicle (20) mounted at the axis of a wheel (21) thereof, the support (10) comprising:
i) electric power supply means (30) suitable to allow charging of a battery of an electric vehicle (20);
ii) at least one upright (11) which extends in a vertical direction (V) from a base (12) of the support (10);
iii) at least one guide (50) fixed on said at least one upright (11), said at least one guide (50) extending in a longitudinal direction (L) of the support (10) between an entry open end (51) and a stop closed end (52) and comprising a longitudinal aperture (53) facing an inner space (13) of the support (10) and having a height lower than the height of the guide (50);
iv) electrical terminals (31) of said power supply means (30) arranged at said stop closed end (52),
**characterized in that** the support (10) further comprises a guide-rail (60) arranged in said inner space (13) and fixed in correspondence of said base (12), said guide-rail (60) extending in said longitudinal direction (L) between a entry end (61) and a stop end (62) and being configured to receive a tire of the wheel (21) of the electric vehicle (20), wherein said entry end (61) of the guide-rail (60) precedes the entry end (51) of the at least one guide (50) in an insertion direction (L1) of the electric vehicle (20) into the support (10)
and **in that** the entry end (51) of the guide (50) and the entry end (61) of the guide-rail (60) progressively widen in the longitudinal direction (L) towards the outside of the support (10), thus defining leading surfaces.

2. A support (10) according to claim 1, wherein the guide (50) comprises a first portion (54) and a second portion (55) that are inclined relative to the base (12) of the support (10), said first portion (54) being inclined in an ascending direction in the insertion direction (L1) of the electric vehicle (20) into the support (10), from the entry open end (51) towards an intermediate portion (56) of the guide (50), and said second portion (55) being inclined in a descending direction from said intermediate portion (56) towards the stop closed end (52) of the guide (50).

3. A support (10) according to claim 2, wherein the slope of said first and second inclined portions (54, 55) relative to the base (12) of the support (10) is comprised between 10° and 15°.

4. A support (10) according to claim 2 or 3, wherein the first portion (54) of the guide (50) is longer than the second portion (55) of the guide (50).

5. A support (10) according to any one of claims 1 to 4, further comprising a towing device suitable to engage the electric vehicle (20) at the axis of its wheel (21) inserted in the support (10) for moving it along the guide (50) between the entry open end (51) and the stop closed end (52).

6. A support (10) according to claim 5, wherein said towing device comprises a slide slidably restrained to at least one upright (11) of the support (10) and arranged parallel to the guide (50) fixed thereto, said slide being movable between two stop positions respectively corresponding to the ends of the guide (50) and being operable by means of mechanical, electric, pneumatic or hydraulic actuators.

7. A support (10) according to any one of claims 1 to 6, further comprising an outer shell (80) having a dome-shape, said outer shell (80) being suitable to completely cover the at least one upright (11), the at least one guide (50) and the guide-rail (60), the outer shell (80) comprising two symmetrical half-shells (81), which define in the longitudinal direction (L) of the support (10) a slot (82) having in the transverse direction (T) of the support (10) a size substantially corresponding to the lateral size of the frame of the electric vehicle (20).

8. A support (10) according to claim 7, wherein the shell (80) comprises comb-like elements arranged along the edges of the slit (82).

9. A coupling device (40) suitable to allow coupling of a two-wheeled electric vehicle (20) to a support (10) according to any one of claims 1 to 8, said coupling device (40) comprising at least one pin (41) restrained at one end of the axis of one of the wheels (21) of the electric vehicle (20), said at least one pin (41) comprising a hollow cylindrical body (42) intended to be coaxially restrained to the axis of the wheel (21) and a flanged element (43), having a larger diameter than the hollow cylindrical body (42) and arranged at the end of the cylindrical body (42) opposite to the end intended to be inserted coaxially to the axis of the wheel (21), said hollow cylindrical body (42) being configured to be inserted into the longitudinal aperture (53) of the at least one guide (50) of the support (10) and said flanged element (43) being configured to slide inside the guide (50).

10. A coupling device (40) according to claim 9, further comprising an electrical contact (45) arranged so as to close the cavity (44) of the cylindrical body (42) of the pin (41) on the side of the flanged element (43), said electrical contact (45) being connected to an electric wire (W) in turn connected to a pole of the battery of the electric vehicle (20).

11. A parking and charging system for a two-wheeled electric vehicle (20), said system comprising a support (10) according to any one of claims 1 to 8 and a coupling device (40) according to any one of claims 9 to 10.

12. A parking station for two-wheeled electric vehicles, said parking station comprising a plurality of supports (10) according to one of claims 1 to 8.

13. A two-wheeled electric vehicle (20), said electric vehicle (20) comprising a coupling device (40) according to one of claims 9 to 10.

14. A sustainable mobility system, said system comprising a plurality of parking stations according to claim 12 and a plurality of two-wheeled electric vehicles (20) according to claim 13.
